# EUROPEAN PATENT SPECIFICATION

(11) **EP 4 575 396 B1**
(45) Date of publication and mention of the grant of the patent: **17.06.2026**
(21) Application number: 23219304.5
(22) Date of filing: 21.12.2023
(51) Int. Cl.: G01C 15/06, G02B 5/126, G02B 5/09

(54) **RETRO-REFLECTOR ARRANGEMENT**
RETROREFLEKTORANORDNUNG
AGENCEMENT DE RÉTRORÉFLECTEUR

(43) Date of publication of application: 25.06.2025
(73) Proprietor: Hexagon Innovation Hub GmbH, 9435 Heerbrugg (CH)
(72) Inventor: YANG, Zheng, 88046 Friedrichshafen (DE); BRÜHLMANN, Danick, 9422 Staad (CH); STIGWALL, Johan, 9008 St. Gallen (CH); JENSEN, Thomas, 9400 Rorschach (CH)
(74) Representative: Kaminski Harmann

(56) References cited:
- EP-B1- 0 595 271
- US-A- 3 781 083
- US-A- 4 208 097
- US-A1- 2003 174 401
- US-A1- 2008 252 958
- US-A1- 2017 115 113
- US-A1- 2020 264 352

## Description

The invention relates generally to an optical arrangement, preferably for use in the field of industrial metrology or geodetic surveying, which provides retro-reflection of received measuring light.

Surveying systems for determining positions in the field of geodesy or the field of building or construction are diversely known. Examples thereof are systems consisting of a static surveying apparatus having a direction determination unit and a range meter, for example a total station, and a measuring aid instrument for marking a point to be measured or to be characterized, for example a pole. A geodetic measuring device of the prior art is described, for example, in the publication document EP 1 686 350. Layout systems are also known, consisting of a static laser emitter, which by means of a laser beam generates a position reference that can be received by a laser receiver at the point to be marked. Surveying activities are thus carried out by the interaction of a static apparatus, having a known location and therefore offering a position reference, with a receiving or marking, or targetable, measuring aid means, so that the position of individual terrain points such as land surveying points or points on construction site objects, for example in the interior or exterior region of buildings or in road construction, can be determined accurately with view to position measurement or staking-out.

With respect to the configuration of the surveying apparatuses, numerous different embodiments are known. For example, modern total stations have microprocessors for digital post-processing and storage of recorded measurement data. The apparatuses generally have a compact and integrated design, there usually being coaxial distance measuring elements as well as computation, control and storage units in an apparatus. Depending on the level of development of the total station, motorization of the targeting or sighting device and - in the case of using retroreflectors (for instance an all-round prism) as target objects - means for automatic target searching and tracking may furthermore be integrated. As a man-machine interface, the total station may comprise an electronic display/control unit - generally a microprocessor computation unit with an electronic data memory means - having a display and input means, for example a keypad. The display/control unit is supplied with the measurement data recorded by electrical sensors, so that the position of the target point can be determined, optically displayed and stored by the display/control unit. Total stations known from the prior art may furthermore have a radio data interface for setting up a radio link to external peripheral components, for example to the measurement aid instrument or to a handhold data recording apparatus, which may for example be configured as a data logger or field computer.

In order to sight or target the target point to be surveyed, geodetic surveying apparatuses of the generic type comprise a target telescope, for example an optical telescope, as a sighting device. The target telescope is generally rotatable about a vertical upright axis and a horizontal tilt axis relative to a base of the measuring apparatus, so that the telescope can be aligned with the point to be measured by swivelling and tilting. In addition to the optical viewing channel, modern apparatuses may comprise a camera for recording an image, integrated into the target telescope and for example aligned coaxially or parallel, in which case the recorded image may in particular be represented as a live image on the display of the display/control unit and/or on a display of the peripheral apparatus - for example the data logger - used for remote control.

Current surveying apparatuses by now comprise an automatic target tracking function for prisms used as a target reflector (ATR: "Automatic Target Recognition") as standard. To this end, for example, a further separate ATR light source and a special ATR detector (for example a CCD surface sensor, a CMOS image sensor (CIS) or SPAD array) sensitive to this wavelength are additionally integrated in the telescope.

In many geodetic applications, surveying of points is carried out by placing a specially configured measuring aid instrument or target objects (for example surveying rods) at the target point. This usually consists of a pole with a reflector (for example an all-round prism or 360-degre prism) for definition of the measurement path, or of the measurement point. For such surveying tasks, data, instructions, speech and further information items are typically transmitted between the target object and the central measuring apparatus in order to control the measurement process and in order to establish or register measurement parameters. Examples of such data are identification information items for the target object (from example of the type of prism used), the inclination of the pole, the height of the reflector above the ground, reflector constants or measurement values such as temperature or air pressure. These information, or situation-contingent parameters are required in order to allow highly precise targeting and surveying of the measurement point defined by the pole with a prism.

In addition, determination of the spatial orientation or an inclination relative to respectively relevant spatial directions of the respective aid instrument is required or to be adjusted in a defined way (for example vertically), in order together with the determined position of the reflector arranged on the aid instrument to derive the measurement point to be determined by means of the instrument. Such orientation may, for example, be determined by means of an inclination sensor which is provided in a determined position and placement relative to the reflector.

The use of inclination sensors allows simple position determination in two rotational degrees of freedom. In this way, a roll and a pitch of the measuring aid instrument, i.e. a respective rotation about respective horizontal axes, may be determined.

Document US 2008/0252958 A1 discloses a two-sided reflector for surveying, that includes a reflection foil comprising small glass spheres that reflect the incident signal with little scattering in the direction of incidence.

A disadvantage of known surveying targets like an all-round prism typically is that these targets are of comparatively heavy weight. Such heavy weight results from the long-range requirement of the retro-reflector. They enable 3D measurement in field typically up to distance of 300 m from any direction within a range of 360° in yaw and 60° in pitch without adjustment of target orientation. To provide such properties, this type of target is typically constructed with six glass corner-cubes which are polished by high precision machines and assembled manually and are therefore expensive to produce. In consequence, the amount of glass prisms (6 or 8) as well as the supporting structure to protect against shock also contribute to a relatively large weight.

Moreover, for many use cases, a GNSS antenna needs to be mounted on top of the target and the mechanical construction must be sufficiently robust so that the pole can withstand topple over with GNSS antenna. To achieve that, the 360° target has usually a large size and is quite heavy. Another drawback of a corner cube is, that a lateral aiming error of an ATR camera is high due to the refraction effects and flying spots mostly caused by 2-fold reflection (instead of regular 3-fold reflections) at prism corners. The arrangement of six individual prisms also causes errors since the apparent locations of the prisms are not in the same point. This is because of a radial offset from the pole axis and a vertically offset between an upper and a lower prism group.

It is therefore an object of the present invention to provide an improved reflector arrangement which allows reliable and robust measurement while avoiding above disadvantages.

A further object of the present invention is to provide an improved reflector arrangement which provides improved retro-reflecting properties over a wide angular range (field of view) and which has improved handling properties, in particular regarding weight and mounting stability.

These objects are achieved by implementation of the characterising features of the independent claims. Features which refine the invention in an alternative or advantageous way may be found in the dependent patent claims.

The invention relates to a reflector arrangement for determining a position of a target point and/or for marking a target point, in particular for industrial or geodetic surveying. The reflector arrangement has at least two retro-reflecting elements, wherein each of the at least two retro-reflecting elements comprises a respective front boundary surface configured for entry of measuring light into the respective retro-reflecting element and a respective back boundary surface configured for reflecting the measuring light as reflected measuring light. The front boundary surface and the back boundary surface are arranged on opposite sides of the respective retro-reflecting element. Further, each of the at least two retro-reflecting elements comprises a respective optical axis defined by the arrangement of the front boundary surface and/or the back boundary surface of the respective retro-reflecting element.

The front boundary surface and the back boundary surface of each of the at least two retro-reflecting elements are of curved shape. In particular, the front boundary surface is of convex curvature regarding an illumination direction of the measuring light and the back boundary surface is of convex shape. In particular, the curvature centers of the front boundary surface and the back boundary surface are at the same location to provide a monocentric optical design.

For each of the at least two retro-reflecting elements an incidence angle of the measuring light relative to its optical axis is equal to an exit angle of the reflected measuring light relative to its optical axis. This means, the incoming light is retro-reflected (parallel).

Since there may be an offset between the incoming and the reflected measuring light, respective incidence and exit angles at the curved front boundary surface may be different. However, the incidence angle and the exit angle with respect to the reflector arrangement are equal. In other words, the directions of measuring light and reflected light are diametrical.

Each of the at least two retro-reflecting elements comprises a mounting element arranged at and protruding from the back boundary surface, the mounting element providing mounting of the retro-reflecting element at the reflector arrangement.

The measuring light preferably is provided as collimated laser light, in particular emitted by a measuring device like a surveying device (e.g. total station or laser scanner) or a metrology device (e.g. laser tracker). The laser light may be of particular wavelength, e.g. having a wavelength of the visible spectrum VIS (e.g. 658 nm) or of the infrared spectrum IR.

In one embodiment, the back boundary surface can provide a coating to provide reflectivity. The coating may be a dielectric or metal coating. The coating can be provided on the back boundary surface of the retro-reflecting element.

In one embodiment, at least two of the retro-reflecting elements can be arranged with different orientations. In one embodiment, the reflector arrangement can comprise a plurality of the retro-reflecting elements which are arranged each with a particular orientation different from the orientation of the other retro-reflecting elements. An orientation of a retro-reflecting element can preferably be defined by its optical axis and a facing direction of the reflective back boundary surface.

In an embodiment, each of the at least two retro-reflecting elements can be arranged with a particular orientation different from the orientation of the other retro-reflecting elements. Additionally or alternatively, the optical axes of each of the at least two retro-reflecting elements are provided with different orientations.

In an alternative embodiment, at least two of the retro-reflecting elements can be arranged with identical orientations. This may in particular be the case when the reflector arrangement comprises cylindrical shape and the beads (retro-reflecting elements) are not tilted up or down.

In one embodiment, at least one of the retro-reflecting elements can be configured so that the measuring light entering into the retro-reflecting element at the front boundary surface is focussed on the back boundary surface.

According to one embodiment, the front boundary surface and the back boundary surface of at least one of the retro-reflecting elements can be of spherical shape. According to some embodiments, at least one of the boundary surfaces, the front and/or the back boundary surface may be spherically, ellipsoidally, paraboloidally or hyperboloidally formed.

According to an embodiment, at least one of the retro-reflecting elements can comprise a sphere with a refraction index n, wherein 1.9 < n < 2.1, in particular wherein n = 2 or n ~ 2 (n being around 2; n being a function of lamda λ). In particular, the sphere provides the front boundary surface and the back boundary surface. The sphere can be made of optical material which allows to manipulate propagation of the measuring light in a way so that the measuring light is focussed onto the (inner) back boundary surface by entering and passing through the sphere (e.g. by refraction).

In particular, the retro-reflecting element can be made of glass.

According to one embodiment, at least one of the retro-reflecting elements can comprise at least two optical elements, wherein the front boundary surface is provided by a first of the at least two optical elements and the back boundary surface is provided by a second of the at least two optical elements. In particular, each of the at least two optical elements can have a refractive index n of n < 2.1.

In particular, the front boundary surface can comprise a radius of curvature different from the radius of curvature of the back boundary surface. The radius of curvature of the front boundary surface can preferably be smaller than the radius of curvature of the back boundary surface.

In one embodiment, each of the at least two optical elements can define a centre point, in particular an optical or a geometric centre, and the at least two optical elements can be arranged so that the centre points of the at least two optical elements coincide and a monocentric distance between the front boundary surface and the back boundary surface is provided. Such a monocentric design provides that the chief ray from any field angle travels through the same centre point of a monocentric system. Hence, the focusing and retro-reflecting performance over the complete FOV is constant thanks to the spherical symmetry. The same focusing and retro-reflecting performance is realisable with larger aperture, whereas the size can be kept significantly smaller than classical imaging lenses.

In one embodiment, each of the at least two optical elements can be configured so that the centre points of the at least two optical elements are provided with a particular offset and a distance between the front boundary surface and the back boundary surface is smaller than the monocentric distance. By that, an apochromatic retro-reflecting element can be provided regarding particular measuring and illumination wavelengths of a surveying device.

According to one embodiment, the reflector arrangement can comprise a carrier to carry the at least two retro-reflecting elements. The at least two retro-reflecting elements are arranged at the carrier.

In particular, the carrier can comprise a central mount and the at least two retro-reflecting elements can be arranged with different orientation directions, in particular wherein the mount is provided by a rod extending through the carrier. The mount can preferably be designed to connect a further component with the reflector arrangement. In particular, the mount can be arranged (oriented) and configured to hold a GNSS antenna on top of the reflector arrangement.

In one embodiment, the carrier can comprise a spherical or cylindrical shape and can comprise at least two recesses. Each recess can be configured to carry one retro-reflecting element and one respective retro-reflecting element can be arranged at each recess. In particular, the carrier can comprise a plurality of recesses and the recesses are homogeneously and/or equidistantly distributed over (with respect to) the surface of the carrier.

The carrier can be built in lightweight design. The carrier can for instance comprise a lightweight metallic material, e.g. aluminium, or can even be made from it. Using such material to build the carrier provides improved robustness and structural stability of the carrier and the entire reflector arrangement. By that, a GNSS antenna can comparatively easily be mounted on the carrier. Further, due to the spatial extension of the carrier a rod-like mount can be arranged at least partly inside of the carrier, in particular extending throughout the entire carrier to also provide mounting of the reflector arrangement on e.g. a surveying pole.

The invention also relates to a retro-reflecting element for a reflector arrangement of above. The retro-reflecting element comprises a front boundary surface configured for entry of measuring light into the retro-reflecting element and a back boundary surface configured for reflecting the measuring light as reflected measuring light, wherein the front boundary surface and the back boundary surface are arranged on opposite sides of the retro-reflecting element. An optical axis is defined by the arrangement of the front boundary surface and/or the back boundary surface of the retro-reflecting element.

The front boundary surface and the back boundary surface of the retro-reflecting element are of curved shape. The retro-reflecting element comprises a mounting element arranged at the back boundary surface and protruding from the back boundary surface, the mounting element providing mounting of the retro-reflecting element at the reflector arrangement.

The design of such a retro-reflecting element provides efficient and precise arrangement of one or a plurality of such retro-reflecting element e.g. at a carrier of the reflector arrangement. Hence, the components of the reflector arrangement can be manufactured separately and combined in a later step. Further, in case of damage of one of the retro-reflecting elements the respective element can be replaced quickly, and precision of the reflector arrangement can be restored.

In one embodiment, the mounting element can comprise a first end and a second end, wherein the first end comprises a reflecting surface facing away from the mounting element, the first end is attached to the back boundary surface, and the reflecting surface of the first end provides the reflecting back boundary surface. In particular, the second end is configured to be connected to a recess of the reflector arrangement.

As for example, a pin (mounting element) can have a reflective concave spherical shape at one end. The pin can be fixed with an optical transparent adhesive to an optical element of the retro-reflecting element which optical element provides the back boundary surface. In particular, the optical element is embodied as a sphere, e.g. N2 sphere.

The invention also relates to a method of providing a reflector arrangement. The method comprises providing at least one retro-reflecting element, the retro-reflecting element comprises a front boundary surface configured for entry of measuring light into the retro-reflecting element, a back boundary surface configured for reflecting the measuring light as reflected measuring light, wherein the front boundary surface and the back boundary surface are arranged on opposite sides of the retro-reflecting element, and a mounting element arranged at and protruding from the back boundary surface.

The method also comprises providing a carrier with at least one recess to carry the at least one retro-reflecting element, wherein the recess is configured to receive the mounting element of the retro-reflecting element, and arranging a number of retro-reflecting elements corresponding to the number of recesses at the carrier by inserting each mounting element of the retro-reflecting elements into a respective recess.

In one embodiment, at least two recesses can be provided so that each recess comprises a particular orientation different from the orientations of the other recesses, wherein the orientation of a recess is defined by an inserting axis and an opening of the respective recess. The provision of the recesses with particular orientations provides for comparatively easy assembling of the reflector arrangement, since no additional alignment of the single reflecting elements becomes necessary.

The mounting element can be provided by a stud, a pin, a bolt, a rod or the like. In one embodiment, the mounting element can comprise a reflective end surface as described above.

In one embodiment, the method comprises providing a mounting plate which comprises at least one recess, providing an optically transparent bead in the recess, in particular optically transparent regarding a wavelength range related to particular measuring light, providing a sealing cover on the optically transparent bead to define a surface region of the bead to be coated and applying a reflective coating on the bead and, by that, providing a coated bead . Further, the method comprises providing a guiding plate with a guide on the coated bead, wherein the guiding plate and the mounting plate are arranged so that the guide is centrally arranged relative to the coated surface region of the coated bead, providing the mounting element in the guide so that the mounting element contacts the coated bead, applying an adhesive at the mounting element and at the coated bead to provide connection between the mounting element and the coated bead and by that providing the retro-reflecting element.

By manufacturing a retro-reflecting element according to the method above an initially non-reflective element can be processed, i.e. coated, to provide a reflective element. The initial element is chosen with respect to material, dimension, and shape so that the coating already provides a retro-reflective element. In addition, the method also provides to precisely connect and orientate a mounting element relative to the coated region of the retro-reflecting element. In particular, the mounting element is connected and oriented so that an extension of the mounting element is parallel to the optical axis of the retro-reflecting element. The mounting element preferably is arranged on the back boundary surface and points away from the coated region.

The invention also relates to a reflector arrangement for determining a position and/or for marking a target point, in particular for industrial or geodetic surveying, which is obtained by executing the method of above.

The inventive aspects are described or explained in more detail below, purely by way of example, with reference to working examples shown schematically in the drawing. Identical elements are labelled with the same reference numerals in the figures. The described embodiments are generally not shown true to scale and they are also not to be interpreted as limiting the invention. Specifically,
- Fig. 1:: shows a geodetic surveying system having a reflector arrangement according to the invention;
- Fig. 2:: shows an exemplary embodiment of a reflector arrangement according to the invention;
- Fig. 3a-b:: show further exemplary embodiments of a reflector arrangement according to the invention;
- Fig. 4a-b:: show embodiments of retro-reflecting elements of a reflector arrangement according to the invention;
- Fig. 5a-c:: show an approach according to the invention to adjust optical properties of a retro-reflecting elements of a reflector arrangement;
- Fig. 6a-b:: show an approach according to the invention to adjust optical properties of a retro-reflecting elements of a reflector arrangement; and
- Fig. 7a-c:: show an assembly approach for a reflector arrangement according to the invention.

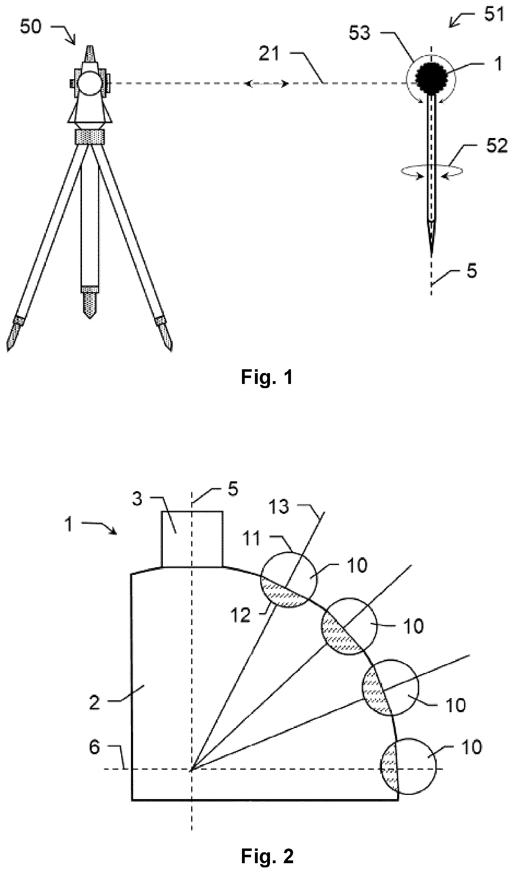

**Figure 1** shows a surveying apparatus 50, in particular configured as a total station or multi station, having a base, a supporting unit, which can be swiveled relative to the base about a vertical swivel axis, and a targeting unit which can be rotated about a horizontal axis and, by means of the supporting unit, about the vertical axis. A measurement laser beam 21 (measuring light) is emitted from the targeting unit and strikes a reflector arrangement 1 of a measuring aid instrument 51 configured as a pole. Typically, (collimated) laser radiation, which can be generated by a laser diode or gas laser provided on the surveying apparatus 50, is used as the measuring light 21. The reflector arrangement 1 is built as a retroreflector and is shown and described in more detail below.

For range measurement, the measuring light 21 is reflected back parallel by the retroreflector, recorded by the surveying apparatus 50 and evaluated in respect of distance information, for example by means of a time-of-flight measurement. The position of the measuring aid instrument 51 may be determined with the aid of the determination of the angular setting of the targeting unit, i.e. the emission direction of the laser 21.

The reflector arrangement 1 of the measuring aid instrument 51 comprises a plurality of retro-reflecting elements, wherein each of these elements comprises a front boundary surface and the reflectively coated back boundary surface of curved shape and an incidence angle of the measuring light 21 relative to its optical axis is equal to an exit angle of the reflected measuring light relative to its optical axis. The retro-reflecting elements are arranged with different orientations. By that, a retro-reflector providing 360° (horizontal) angular range of retro-reflection 52 (similar to field of view) around a yaw axis 5 (carrier axis) can be provided. Moreover, a comparatively large angular range of retro-reflection53 (field of retro-reflection) around a pitch axis (orthogonal relative to the yaw axis 5) is provided. This also provides a big advantage for some use cases where there is large height difference between a target (comprising the reflector arrangement) and a surveying device.

**Figure 2** shows an exemplary embodiment of a reflector arrangement 1 according to the invention. The reflector arrangement 1 is partially shown and is shown in cross-section view.

The reflector arrangement 1 comprises a plurality of retro-reflecting elements 10. Each of the retro-reflecting elements 10 comprises a front boundary surface 11 (exemplarily shown only for one of the retro-reflecting elements) which is configured and oriented for entry of measuring light into the respective retro-reflecting element 10. In addition, each of the retro-reflecting elements 10 comprises a respective back boundary surface 12 configured for reflecting the measuring light as reflected measuring light. The front boundary surface 11 and the back boundary surface 12 are arranged on opposite sides of the retro-reflecting element 10.

Each of the retro-reflecting elements 10 defined an optical axis 13 by its front boundary surface 11 and back boundary surface 12. In particular, the optical axis 13 intersects a centre point of the retro-reflecting element 10 and a centre point of the back boundary surface 12. The centre point of the back boundary surface 12 is preferably defined by a centre point of a reflectively coated region which represents the back boundary surface 12.

In another embodiment, the backside of the retro-reflecting elements is not coated but reflectivity may be provided by alternative solutions, e.g. a mounting element with a reflective end attached to the retro-reflecting elements or a reflective inner surface of a recess of the carrier.

The front boundary surface 11 and the back boundary surface 12 are of curved shape. According to the shown embodiment the retro-reflecting elements 10 are designed as spheres, wherein a reflective coating is arranged on one side of the sphere and the opposite side is optically transparent for measuring light of a particular wavelength or wavelength range.

The retro-reflecting elements 10 are further configured so that an incidence angle of the measuring light relative to the optical axis 13 is equal to an exit angle of the reflected measuring light relative to the optical axis 13, i.e. the measuring light is retro-reflected.

Furthermore, the reflector arrangement 1 comprises a carrier 2. The retro-reflecting elements 10 are mounted on the carrier 2, wherein each of the retro-reflecting elements 10 provides a particular orientation different from the orientations of the other retro-reflecting elements 10.

In the embodiment shown the carrier 2 provides a spherical shape and the retro-reflecting elements 10 are homogeneously and/or equidistantly distributed over the surface of the carrier 2. As shown, the retro-reflecting elements 10 are arranged so that the back boundary surfaces 12 of the elements 10 face the centre of the spherical carrier 2 and the front boundary surfaces 11 point away from the carrier 2. In particular, the retro-reflecting elements 10 are arranged so that their optical axes 13 intersect in one common intersection region (e.g. having a spatial tolerance of about 2mm) or point, wherein the intersection point coincidences with the centre point of the carrier 2.

One benefit of this embodiment is that lateral measurement can become pitch-independent since the center of gravity of the signal (related to an ATR camera image) remains centered as the carrier 2 rotates. This may, in particular, be advantageous compared to a cylindrical arrangement where the signal may move up/down since all spheres reflect with the same strength and are offset from the pole axis.

The carrier 2 further comprises a central mount 3. The mount 3 can preferably be arranged so that an additional surveying element, e.g. a GNS or GNSS antenna can be mounted on top of the carrier 2.

The carrier can comprise or can be manufactured of a metal-containing material, in particular can be made of an aluminium based material. By that, the carrier 2 can provide structural robustness and stability as well as comparatively low weight. By using aluminum, the mechanical structure of carrier can be designed in such way that the total weight is lower than tradition prism where the most volume is occupied with massive glass.

The mount 3 can be attached on top of the carrier 2 or can extend into the inner volume of the carrier 2, in particular can extend through the whole carrier.

The design of the reflector arrangement 1 provides retro-reflection of measuring light over a wide angular range, in particular over 360° (yaw angle) around a carrier axis 5 (yaw axis) and over up to 180° around a pitch axis 6, which is orthogonally oriented relative to the carrier axis 5.

The retro-reflection of measuring light is provided by at least one of the retro-reflecting elements 10. In particular, retro reflecting the measuring light can be provided simultaneously by at least two or by a plurality of the retro-reflecting elements 10. The amount and/or which of the retro-reflecting elements 10 provide reflection depends on an incidence angle (in particular also on an offset) of the measuring light relative to the reflector arrangement 1. In other words, when an incidence angle of the measuring light changes, the retro-reflecting elements 10 which contribute to total retro-reflection also change.

The idea of the reflector arrangement 1 (in the following also: bead reflector) is to arrange at least two, preferably multiple, beads (retro-reflecting elements 10) e.g. in spherical layout to cover a sufficient angular range (FOV), in particular at least close to 4 π solid angle. The FOV of each bead is designed to be large enough to have overlap with enough neighbourhood beads. In contrast to typical corner cube retro-reflectors, here the retroreflecting mechanism is based on refraction instead of reflection. The incoming light can be focused on the rear surface of each bead and reflected back to a receiver. Each bead can behave like an afocal imaging lens. Its aberration is preferably chosen to be as less as possible within the complete FOV to achieve constantly bright signal independent of reflector orientation. In other words, each bead provides large aperture, large FOV, constantly good imaging performance and at the same time small size and weight.

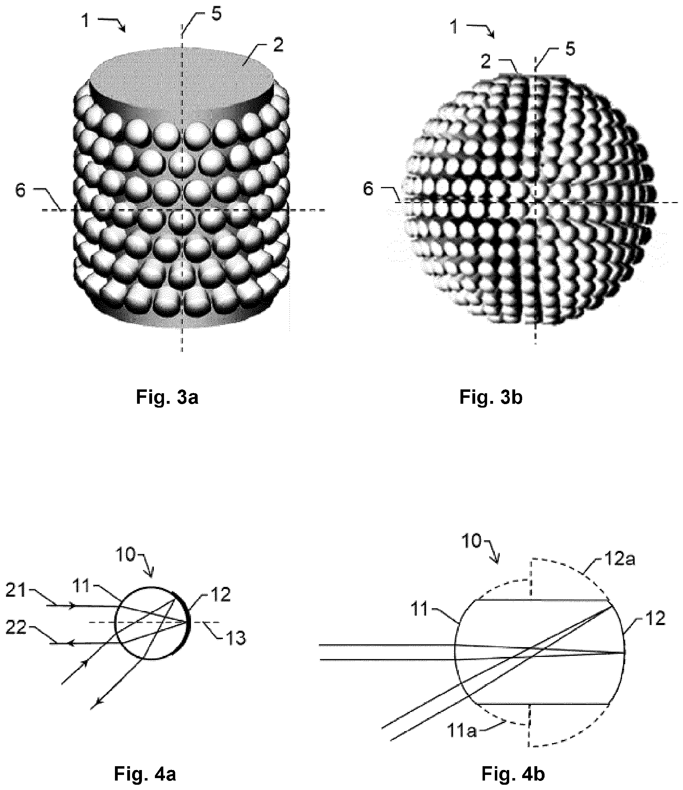

**Figures 3a** and **3b** exemplary show two further embodiments of reflector arrangements 1 according to the invention.

**Figure 3a** shows a reflector arrangement 1 with a carrier 2, wherein the carrier provides a cylindrical shape. A plurality of retro-reflecting elements 10 are arranged at the carrier 2. The retro-reflecting elements 10 are arranged with different orientations so that measuring light directed towards the reflector arrangement 1 is retro-reflected over a wide field of view.

The particular design of the reflector arrangement 1 provides retro-reflection over 360° about the carrier axis 5. Moreover, due to the orientations of the retro-reflecting elements 10, the range of (sufficient) retro-reflection about the pitch axis 6 is still comparatively large, i.e. retro-reflection can be provided over up to 120° (± 60°) or even up to 140° (±70°).

In an alternative embodiment, the retro-reflecting elements 10 are oriented along the normal of the cylinder surface, i.e. not tilted up / down. This may provide easier manufacturing of the assembly and/or a stronger signal at normal incidence while still a sufficient FOV can be provided since each bead has a large angle range.

**Figure 3b** shows a reflector arrangement 1 with a carrier 2, wherein the carrier provides a spherical shape. A plurality of retro-reflecting elements 10 are arranged at the carrier 2. The retro-reflecting elements 10 are arranged with different orientations so that measuring light directed towards the reflector arrangement 1 is retro-reflected over a wide field of view.

Compared with the design of the reflector arrangement 1 of figure 3a, here the total retro-reflection range related to pitch and yaw axes can further be enlarged. The retro-reflecting elements 10 can be oriented over a wider range related to a pitch angle thanks to the spherical shape. In particular in the upper and lower regions of the carrier 2 the retro-reflecting elements 10 can even be oriented to face straight upwards and/or straight downwards, i.e. with an angle of orientation of +90° or -90° related to the pitch axis 6.

Moreover, the design of the spherical carrier 2 provides an advantageous manufacturing approach where each of the retro-reflecting elements 10 can be oriented with its respective optical axis coaxial with the surface normal which is defined by the surface region at which the retro-reflecting elements 10 is arranged. The spherical shape allows to efficiently provide recesses to respectively mount the retro-reflecting elements 10, e.g. by (orthogonally) drilling in the carrier.

In alternative embodiments (not shown) the reflector arrangement 1 with a carrier 2 can provide a non-homogenous arrangement of the plurality of retro-reflecting elements 10 (beads) over the carrier 2. By that, retro-reflection over wide angular ranges (as described above) can still be provided. In addition, such inhomogeneous (but known) distribution of the retro-reflecting elements 10 can provide to also determine the orientation of the reflector arrangement 1.

As for example, an image of the (illuminated and, by that, reflecting) reflector arrangement 1 can be captured and, by that, the reflections of a group of retro-reflecting elements 10 can be imaged. The image can be processed and a pattern of the reflections can be determined based on the image. According to the inhomogeneous arrangement of the retro-reflecting elements 10, such pattern can be unambiguously assigned to the group of retro-reflecting elements 10 (which respectively are arranged at the carrier 2 with a corresponding pattern). As a result, the orientation of the reflector arrangement 1 can be derived based on the shape and/or orientation of the pattern in the image.

Further, particular intensities of the reflections can be considered in the course of image processing to derive the detected group of retro-reflecting elements 10.

The retro-reflecting elements 10 can also be designed to provide different and/or individual reflectivity. Such variations in reflectivity can be detected and resolved (in the image by image processing). In consequence, the orientation of the reflector arrangement 1 can also be derived based on a pattern of reflectivity.

The above approaches of determining the orientation of the reflector arrangement 1 can preferably be applied with measurements of a surveying device of up to a distance of about 50 m. Here, focussing an ATR of the surveying device can provide to resolve the retro-reflecting elements 10.

**Figures 4a** and **4b** exemplary show two embodiments of bead-like retro-reflecting elements 10 of a reflector arrangement according to the invention.

**Figure 4a** shows an embodiment of a retro-reflecting element 10 with a front boundary surface 11 and a back boundary surface 12. The retro-reflecting element 10 comprises a spherical shape, in particular the retro-reflecting element 10 is built as a sphere.

The retro-reflecting element 10 is provided as a ball lens with a refractive index at least close to 2. By fine tuning of the refractive index, the position of the focal plane can be adjusted against the wavelength. The ball radius can be chosen freely, as the focal plane always coincide with the ball surface independent of the ball radius. Hence, the ball lens can have an angular range of retro-reflectivity (field of view (FOV)) of ± 90 degrees.

In the shown embodiment, the reflective back boundary surface 12 is coated with a metallic coating. In particular, the coating covers the hemisphere. The coating provides a reflectivity of at least 95% within a nearly 2 π solid angle.

The advantage properties of the bead-like retro-reflecting element 10 are, e.g. a large aperture, a large FOV, a good imaging performance, and at the same time a small size and weight, that can be provided by the given monocentric design of the retro-reflecting element 10. A monocentric design is characterised with all its components (including stop, lenses and image plane) shaped and positioned spherical-symmetrically against a single centre point where the stop is located virtually. The chief ray from any field angle travels through the same centre point of a monocentric system. The imaging performance over the complete FOV can be constant thanks to the spherical symmetry.

According to the invention, these properties are provided by one single optical lens with two optical surfaces.

Measuring light 21, e.g. emitted by a surveying device like a total station or tachymeter, can be provided to enter the bead 10 at the front surface 11. The measuring light 21 is focussed onto the back boundary surface 12 and is reflected back as reflected measuring light 22. The incidence angles of the entering measuring light 21 and the reflected measuring light 22 relative to the optical axis 13 of the bead 10 are identical.

**Figure 4b** shows a further embodiment of a retro-reflecting element 10 with a front boundary surface 11 and a back boundary surface 12. Here, the retro-reflecting element 10 comprises an elongated shape.

The elongated retro-reflecting element 10 has two spherical surfaces, i.e. the front boundary surface 11 and the back boundary surface 12, with different radii. The radius 11a of the front boundary surface 11 is smaller than the radius 12a of the back boundary surface 12.

The curvature centres of both surfaces 11 and 12 are at the same position, and therefore the design is monocentric too. The radius of the back surface 12 is accordingly adapted to the refractive index of the optical material and curvature radius of front surface in such way that the focal plane coincides with the back surface 12. The choice of the refractive index is therefore flexible so that any type of plastic and glass material is usable. The refractive index is preferably be chosen to be smaller than 2.

By that, the retro-reflecting element 10 can be manufactured easier and more efficiently. Glass and plastic moulding is a preferred technology rather than classical grinding and polishing ( e.g. PGM, precision glass moulding).

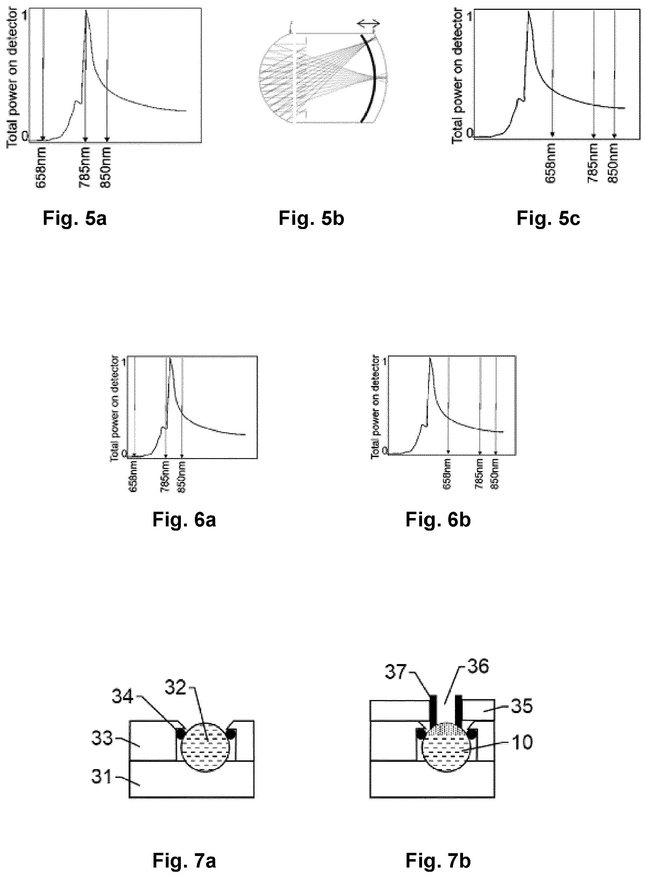

**Figures 5a****-c** show an approach according to the invention of how to adjust the optical properties of a retro-reflecting element 10 to meet specific characteristics required to be used with a surveying device.

A surveying device like a total station can provide three optical subsystems (EDM, ATR and Power Search) running at three different wavelengths (e.g. 658nm, 785nm and 850nm). To achieve constantly good radiometry over a spectral range of about 200 nm the configuration of the retro-reflecting element 10 can be specifically adjusted to overcome negative influences, e.g. due to the dispersion of the manufacturing material.

The radiometric response against wavelengths change is asymmetric. The radiometry toward longer wavelength is reduced significantly slower than moving toward the opposite direction (see figure 5a). When moving in the slowly changing direction, radiometry remains around 20% of total power on a detector after reflection over a broad spectral range of several hundred nanometres.

According to this finding, it is proposed to design an achromatic bead 10 by shifting the response curve in such way so that the three relevant wavelengths are located at the right side of the peak position.

According to the invention, the elongated retro-reflecting element 10 is designed so that a negative thickness offset is introduced for the bead design. In other words, a regular distance between the front boundary surface 11 and the back boundary surface 12 (as shown in figure 4b) is reduced (see figure 5b).

As a result, the distribution of power at the detector is shifted relative to the measuring wavelengths so that for each of the wavelengths the power at the detector is at least 10-20 % of the detectable peak power (see figure 5c).

**Figures 6a****-b** show a further approach according to the invention of how to adjust the optical properties of a retro-reflecting element 10 to meet specific characteristics required to be used with a surveying device.

Here, the retro-reflecting element is built as a sphere or bead (as shown in figure 4a). It was found that for meeting optical surveying properties, the retro-reflecting element 10 should preferably be configured as a ball-lens made from optical material which has an adjusted refractive index. Retro-reflection properties of the retro-reflecting element 10 directly depend on the refractive index.

As can be seen from figure 6a the total power of measuring light with a wavelength of 658 nm results to near zero after reflection at a sphere having a refractive index of about 2.022. Hence, for instance, the measuring light of a total station used of determining the distance to a reflector (having a wavelength of 658 nm) would be reflected with insufficient intensity. A solution for this problem was found by changing the optical material of the bead and by that changing the refractive index.

In consequence, the retro-reflecting element 10 can be made from material which provides a slightly different refractive index of 2.0033. By that, the reflection properties of the retro-reflecting element 10 are shifted so that all three relevant wavelength regions can be reflected by providing sufficient power at a detecting unit after reflection at the bead 10. As for example, by choosing glass with a refractive index n = 2.0033 for the bead design thickness variations (diameter variations of the sphere) have no impact on the wavelength dependency. This is one advantage of the spherical shape compared to a design with different radii.

Respective tuning of the refractive index of the material can be a consequence of spherical aberrations effects. The reflected ray 22 may only be parallel to the incoming 21 for a limited range of incidence angles / offsets from the bead's optical axis. E.g. for the wavelength where n = 2, rays close to the center of the bead are retro-reflected, but for longer wavelengths the refractive index becomes n < 2 and retro-reflection occurs at larger offsets where spherical aberration adds additional refractive power. At shorter wavelength with n > 2, the retro-reflective effect vanishes.

**Figures 7a****-c** show an approach according to the invention of how to manufacture a reflector arrangement 1 with a plurality of retro-reflecting elements 10. First, the retro-reflecting elements 10 have to be manufactured to provide sufficient retro-reflectivity and, in a next step, the retro-reflective elements have to be arranged at the reflector arrangement 1 with particular orientations.

A mounting plate 31 is provided. The plate 31 comprises at least one recess and an optically transparent bead 32 is arranged in the recess. Here, optically transparent is referred to a wavelength range related to a particular measuring light of a surveying device as mentioned above. Next, a sealing cover 33 is put on the optically transparent bead 32 to define a surface region of the bead to be coated. The sealing cover 33 comprises a seal 34 or distance ring, e.g. an O-ring or the like, which contacts the bead 32 and, by that, separates a portion of the bead 32 (see figure 7a).

This arrangement provides to coat the sealed region by applying a reflective (mirror) coating. The coating can be applied by spraying, painting or other deposition techniques. In particular, the coating is dried or cured afterwards. A coated retro-reflecting element 10 results from this procedure.

In a next step, a guiding plate 35 with a guide 36 is provided on the coated bead 10, wherein the guiding plate 35 and the mounting plate 31 are arranged so that the guide 36 is centrally arranged relative the coated surface region of the bead 10.

An essential step is to glue a guiding stud 37 (mounting element) within single step directly after coating the bead. Hence, a stud 37 is provided in the guide 36 so that the stud 37 contacts the coated bead 10. Instead of a stud also a bolt or a pin or the like can be used.

An adhesive (e.g. glue) is applied so that it covers at least a part of the stud and at least a part of the coated bead 10 to provide connection between the stud 37 and the coated bead 10 (see figure 7b). As for example, if the stud is provided as hollow guiding stud it can be glued centrally on the top of coating area and the adhesive can be applied through the hole of the stud 37.

By avoiding any active alignment of the coated bead and or the stud a cost-effective, scalable, precise and robust assembly concept can be provided.

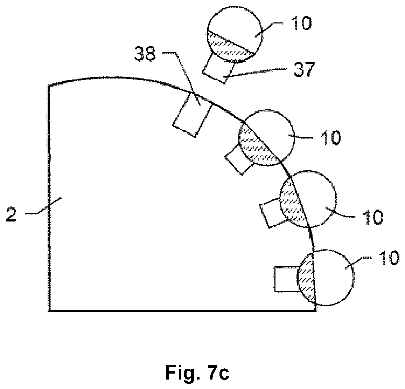

As mentioned, the alignment accuracy between a stud axis and the coating area is guaranteed by the precisely positioned guiding plate 33. The connected guiding stud 37 allows effortless and automated assembly of coated ball lenses 10 in the bead carrier 2, as shown with figure 7c. This procedure can be conducted and parallelized to achieve high volume and high throughput via using state-of-the-art machine automation and/or robotics.

The retro-reflecting element 10 with the glued stud can easily be arranged at a carrier 2 of a reflector arrangement 1. For that, the carrier can comprise several recesses 38, wherein each recess 38 is configured to carry one retro-reflecting element 10 (see figure 7c). Such assembly can guarantee a desired distribution of the retro-reflecting element 10 over the carrier 2 by respective arrangement of the recesses 38. Furthermore, due to the individual configuration of the retro-reflecting elements 10 the desired orientation of each of these elements 10 can also be provided in reliable and robust manner.

Although the invention is illustrated above, partly with reference to some preferred embodiments, it must be understood that numerous modifications and combinations of different features of the embodiments can be made. All of these modifications lie within the scope of the appended claims.

## Claims

1. Reflector arrangement (1) for determining a position and/or for marking a target point, in particular for industrial or geodetic surveying, having at least two retro-reflecting elements (10), wherein each of the at least two retro-reflecting elements (10) comprises
• a respective front boundary surface (11) configured for entry of measuring light (21) into the respective retro-reflecting element (10) and a respective back boundary surface (12) configured for reflecting the measuring light as reflected measuring light (22), wherein the front boundary surface (11) and the back boundary surface (12) are arranged on opposite sides of the respective retro-reflecting element (10), and
• a respective optical axis (13) defined by the arrangement of the front boundary surface (11) and/or the back boundary surface (12) of the respective retro-reflecting element (10),
wherein
• the front boundary surface (11) and the back boundary surface (12) of each of the at least two retro-reflecting elements (10) are of curved shape, and
• for each of the at least two retro-reflecting elements (10) an incidence angle of the measuring light (21) relative to its optical axis (13) is equal to an exit angle of the reflected measuring light (22) relative to its optical axis (13),
**characterised in that**
each of the at least two retro-reflecting elements (10) comprises a mounting element (37) arranged at and protruding from the back boundary surface (12), the mounting element (37) providing mounting of the retro-reflecting element (10) at the reflector arrangement (1).

2. Reflector arrangement (1) according to claim 1,
**characterised in that**
• at least two of the retro-reflecting elements (10) are arranged with different orientations, in particular each of the at least two retro-reflecting elements (10) is arranged with a particular orientation different from the orientation of the other retro-reflecting elements (10), and/or
• the reflector arrangement (1) comprises a plurality of the retro-reflecting elements which are arranged each with a particular orientation different from the orientation of the other retro-reflecting elements, and/or
• the optical axes (13) of each of the at least two retro-reflecting elements (10) are provided with different orientations.

3. Reflector arrangement (1) according to any of the preceding claims,
**characterised in that**
at least one of the retro-reflecting elements (10) is configured so that the measuring light (21) entering into the retro-reflecting element (10) at the front boundary surface (11) is focussed on the back boundary surface (12).

4. Reflector arrangement (1) according to any of the preceding claims,
**characterised in that**
• the front boundary surface (11) and the back boundary surface (12) of at least one of the retro-reflecting elements (10) are of spherical shape, and/or
• at least one of the retro-reflecting elements (10) comprises a sphere with a refraction index n of 1.9 < n < 2.1, in particular wherein n = 2.

5. Reflector arrangement (1) according to any of the preceding claims,
**characterised in that**
at least one of the retro-reflecting elements (10) comprises at least two optical elements, wherein the front boundary surface (11) is provided by a first of the at least two optical elements and the back boundary surface (12) is provided by a second of the at least two optical elements, in particular wherein each of the at least two optical elements have a refractive index n of n < 2.1.

6. Reflector arrangement (1) according to claim 5,
**characterized in that**
the front boundary surface (11) comprises a radius of curvature different from the radius of curvature of the back boundary surface (12), in particular wherein the radius of curvature of the front boundary surface is smaller than the radius of curvature of the back boundary surface.

7. Reflector arrangement (1) according to claim 5 or 6,
**characterized in that**
each of the at least two optical elements (10) has a centre point and the at least two optical elements (10) are arranged so that
• the centre points of the at least two optical elements (10) coincide and a monocentric distance between the front boundary surface (11) and the back boundary surface (12) is provided, or
• the centre points of the at least two optical elements (10) are provided with a particular offset and a distance between the front boundary surface (11) and the back boundary surface (12) is smaller than the monocentric distance.

8. Reflector arrangement (1) according to any of the preceding claims,
**characterised in that**
the reflector arrangement (1) comprises a carrier (2) to carry the at least two retro-reflecting elements (10) and the at least two retro-reflecting elements are arranged at the carrier.

9. Reflector arrangement (1) according to claim 8,
**characterised in that**
the carrier (2) comprises a central mount (3) and the at least two retro-reflecting elements (10) are arranged with different orientation directions, in particular wherein the mount (3) is provided by a rod extending through the carrier (2).

10. Reflector arrangement (1) according to claim 8 or 9,
**characterised in that**
the carrier (2) comprises a spherical or cylindrical shape and at least two recesses (38), wherein
• each recess (38) is configured to carry one retro-reflecting element (10) and
• one respective retro-reflecting element (10) is arranged at each recess (38), in particular wherein the carrier (2) comprises a plurality of recesses (38) and the recesses are homogeneously and/or equidistantly distributed with respect to the surface of the carrier (2).

11. Retro-reflecting element (10) for a reflector arrangement (1) of any of the preceding claims, the retro-reflecting element (10) comprises
• a front boundary surface (11) configured for entry of measuring light (21) into the retro-reflecting element (10) and a back boundary surface (12) configured for reflecting the measuring light as reflected measuring light (22), wherein the front boundary surface (11) and the back boundary surface (12) are arranged on opposite sides of the retro-reflecting element (10), and
• an optical axis (13) defined by the arrangement of the front boundary surface (11) and/or the back boundary surface (12) of the retro-reflecting element (10), wherein
• the front boundary surface (11) and the back boundary surface (12) of the retro-reflecting element (10) are of curved shape,
**characterised in that**
• the retro-reflecting element (10) comprises a mounting element (37) arranged at and protruding from the back boundary surface (12), the mounting element (37) providing mounting of the retro-reflecting element (10) at the reflector arrangement (1).

12. Retro-reflecting element (10) according to claim 11,
**characterised in that**
the mounting element (37) comprises a first end and a second end, wherein
• the first end comprises a reflecting surface facing away from the mounting element (37),
• the first end is attached to the back boundary surface (12), and
• the reflecting surface of the first end provides the reflecting back boundary surface (12),
in particular wherein the second end is configured to be connected to a recess of the reflector arrangement (1).

13. Method for providing a reflector arrangement (1), the method comprises
• providing at least one retro-reflecting element (10), the retro-reflecting element (10) comprises
□ a front boundary surface (11) configured for entry of measuring light (21) into the retro-reflecting element (10),
□ a back boundary surface (12) configured for reflecting the measuring light as reflected measuring light (22), wherein the front boundary surface (11) and the back boundary surface (12) are arranged on opposite sides of the retro-reflecting element (10), and
□ a mounting element (37) arranged at and protruding from the back boundary surface (12),
• providing a carrier (2) with at least one recess (38) to carry the at least one retro-reflecting elements (10), wherein the at least one recess (38) is configured to receive the mounting element (37) of the retro-reflecting element (10), and
• arranging a number of retro-reflecting elements (10) corresponding to the number of recesses (38) at the carrier (2) by inserting each mounting element (37) of the retro-reflecting elements into a respective recess (38),
in particular wherein at least two recesses are provided so that each recess comprises a particular orientation different form the orientation of the other recesses, wherein the orientation of a recess is defined by an inserting axis and an opening of the respective recess.

14. Method according to claim 13,
**characterised in that**
the method comprises
• providing a mounting plate (31) which comprises at least one recess,
• providing an optically transparent bead (32) in the recess, in particular optically transparent regarding a wavelength range related to particular measuring light,
• providing a sealing cover (33) on the optically transparent bead (32) to define a surface region of the bead to be coated,
• applying a reflective coating on the bead (32) and, by that, providing a coated bead,),
• providing a guiding plate (35) with a guide (35) on the coated bead, wherein the guiding plate (35) and the mounting plate (31) are arranged so that the guide (35) is centrally arranged relative the coated surface region of the coated bead,
• providing the mounting element (37) in the guide (35) so that the mounting element (37) contacts the coated bead,
• applying an adhesive at the mounting element (37) and at the coated bead to provide connection between the mounting element (37) and coated bead and by that providing the retro-reflecting element (10).

## Patentansprüche

1. Reflektoranordnung (1) zum Bestimmen einer Position und/oder zum Markieren eines Zielpunkts, insbesondere für die industrielle oder geodätische Vermessung, mit mindestens zwei retroreflektierenden Elementen (10), wobei jedes der mindestens zwei retroreflektierenden Elemente (10) umfasst
• eine entsprechende vordere Begrenzungsfläche (11), die für den Eintritt von Messlicht (21) in das entsprechende retroreflektierende Element (10) eingerichtet ist, und eine entsprechende hintere Begrenzungsfläche (12), die zum Reflektieren des Messlichts als reflektiertes Messlicht (22) eingerichtet ist, wobei die vordere Begrenzungsfläche (11) und die hintere Begrenzungsfläche (12) auf entgegengesetzten Seiten des entsprechenden retroreflektierenden Elements (10) angeordnet sind, und
• eine entsprechende optische Achse (13), die durch die Anordnung der vorderen Begrenzungsfläche (11) und/oder der hinteren Begrenzungsfläche (12) des entsprechenden retroreflektierenden Elements (10) definiert ist,
wobei
• die vordere Begrenzungsfläche (11) und die hintere Begrenzungsfläche (12) von jedem der mindestens zwei retroreflektierenden Elemente (10) eine gekrümmte Form aufweisen und
• für jedes der mindestens zwei retroreflektierenden Elemente (10) ein Einfallswinkel des Messlichts (21) relativ zu seiner optischen Achse (13) gleich einem Austrittswinkel des reflektierten Messlichts (22) relativ zu seiner optischen Achse (13) ist,
**dadurch gekennzeichnet, dass**
jedes der mindestens zwei retroreflektierenden Elemente (10) ein Befestigungselement (37) umfasst, das an der hinteren Begrenzungsfläche (12) angeordnet ist und davon vorsteht, wobei das Befestigungselement (37) die Befestigung des retroreflektierenden Elements (10) an der Reflektoranordnung (1) bereitstellt.

2. Reflektoranordnung (1) nach Anspruch 1,
**dadurch gekennzeichnet, dass**
• mindestens zwei der retroreflektierenden Elemente (10) mit unterschiedlichen Ausrichtungen angeordnet sind und insbesondere jedes der mindestens zwei retroreflektierenden Elemente (10) mit einer bestimmten Ausrichtung angeordnet ist, die sich von der Ausrichtung der anderen retroreflektierenden Elemente (10) unterscheidet, und/oder
• die Reflektoranordnung (1) mehrere der retroreflektierenden Elemente umfasst, die jeweils mit einer bestimmten Ausrichtung angeordnet sind, die sich von der Ausrichtung der anderen retroreflektierenden Elemente unterscheidet, und/oder
• die optischen Achsen (13) von jedem der mindestens zwei retroreflektierenden Elemente (10) mit unterschiedlichen Ausrichtungen vorgesehen sind.

3. Reflektoranordnung (1) nach einem der vorstehenden Ansprüche,
**dadurch gekennzeichnet, dass**
mindestens eines der retroreflektierenden Elemente (10) derart eingerichtet ist, dass das an der vorderen Begrenzungsfläche (11) in das retroreflektierende Element (10) eintretende Messlicht (21) auf die hintere Begrenzungsfläche (12) fokussiert ist.

4. Reflektoranordnung (1) nach einem der vorstehenden Ansprüche,
**dadurch gekennzeichnet, dass**
• die vordere Begrenzungsfläche (11) und die hintere Begrenzungsfläche (12) von mindestens einem der retroreflektierenden Elemente (10) eine sphärische Form aufweisen und/oder
• mindestens eines der retroreflektierenden Elemente (10) eine Sphäre mit einem Brechungsindex n von 1,9 < n < 2,1 umfasst, wobei insbesondere n = 2 ist.

5. Reflektoranordnung (1) nach einem der vorstehenden Ansprüche,
**dadurch gekennzeichnet, dass**
mindestens eines der retroreflektierenden Elemente (10) mindestens zwei optische Elemente umfasst, wobei die vordere Begrenzungsfläche (11) durch ein erstes der mindestens zwei optischen Elemente gebildet ist und die hintere Begrenzungsfläche (12) durch ein zweites der mindestens zwei optischen Elemente gebildet ist, wobei insbesondere jedes der mindestens zwei optischen Elemente einen Brechungsindex n von n < 2,1 aufweist.

6. Reflektoranordnung (1) nach Anspruch 5,
**dadurch gekennzeichnet, dass**
die vordere Begrenzungsfläche (11) einen Krümmungsradius aufweist, der sich von dem Krümmungsradius der hinteren Begrenzungsfläche (12) unterscheidet, wobei insbesondere der Krümmungsradius der vorderen Begrenzungsfläche kleiner ist als der Krümmungsradius der hinteren Begrenzungsfläche.

7. Reflektoranordnung (1) nach Anspruch 5 oder 6,
**dadurch gekennzeichnet, dass**
jedes der mindestens zwei optischen Elemente (10) einen Mittelpunkt aufweist und die mindestens zwei optischen Elemente (10) derart angeordnet sind, dass
• die Mittelpunkte der mindestens zwei optischen Elemente (10) zusammenfallen und ein monozentrischer Abstand zwischen der vorderen Begrenzungsfläche (11) und der hinteren Begrenzungsfläche (12) vorgesehen ist, oder
• die Mittelpunkte der mindestens zwei optischen Elemente (10) mit einem bestimmten Versatz vorgesehen sind und ein Abstand zwischen der vorderen Begrenzungsfläche (11) und der hinteren Begrenzungsfläche (12) kleiner ist als der monozentrische Abstand.

8. Reflektoranordnung (1) nach einem der vorstehenden Ansprüche,
**dadurch gekennzeichnet, dass**
die Reflektoranordnung (1) einen Träger (2) zum Tragen der mindestens zwei retroreflektierenden Elemente (10) umfasst und die mindestens zwei retroreflektierenden Elemente an dem Träger angeordnet sind.

9. Reflektoranordnung (1) nach Anspruch 8,
**dadurch gekennzeichnet, dass**
der Träger (2) eine zentrale Befestigung (3) umfasst und die mindestens zwei retroreflektierenden Elemente (10) mit unterschiedlichen Ausrichtungsrichtungen angeordnet sind, wobei insbesondere die Befestigung (3) durch einen sich durch den Träger (2) erstreckenden Stab vorgesehen ist.

10. Reflektoranordnung (1) nach Anspruch 8 oder 9,
**dadurch gekennzeichnet, dass**
der Träger (2) eine sphärische oder zylindrische Form und mindestens zwei Aussparungen (38) umfasst, wobei
• jede Aussparung (38) eingerichtet ist, ein retroreflektierendes Element (10) zu tragen, und
• ein entsprechendes retroreflektierendes Element (10) an jeder Aussparung (38) angeordnet ist, wobei der Träger (2) insbesondere mehrere Aussparungen (38) umfasst und die Aussparungen in Bezug auf die Fläche des Trägers (2) homogen und/oder äquidistant verteilt sind.

11. Retroreflektierendes Element (10) für eine Reflektoranordnung (1) nach einem der vorstehenden Ansprüche, wobei das retroreflektierende Element (10) umfasst
• eine vordere Begrenzungsfläche (11), die für den Eintritt von Messlicht (21) in das retroreflektierende Element (10) eingerichtet ist, und eine hintere Begrenzungsfläche (12), die zum Reflektieren des Messlichts als reflektiertes Messlicht (22) eingerichtet ist, wobei die vordere Begrenzungsfläche (11) und die hintere Begrenzungsfläche (12) auf entgegengesetzten Seiten des retroreflektierenden Elements (10) angeordnet sind, und
• eine optische Achse (13), die durch die Anordnung der vorderen Begrenzungsfläche (11) und/oder der hinteren Begrenzungsfläche (12) des retroreflektierenden Elements (10) definiert ist, wobei
• die vordere Begrenzungsfläche (11) und die hintere Begrenzungsfläche (12) des retroreflektierenden Elements (10) eine gekrümmte Form aufweisen,
**dadurch gekennzeichnet, dass**
• das retroreflektierende Element (10) ein Befestigungselement (37) umfasst, das an der hinteren Begrenzungsfläche (12) angeordnet ist und davon vorsteht, wobei das Befestigungselement (37) die Befestigung des retroreflektierenden Elements (10) an der Reflektoranordnung (1) bereitstellt.

12. Retroreflektierendes Element (10) nach Anspruch 11,
**dadurch gekennzeichnet, dass**
das Befestigungselement (37) ein erstes Ende und ein zweites Ende umfasst, wobei
• das erste Ende eine von dem Befestigungselement (37) abgewandte reflektierende Fläche umfasst,
• das erste Ende an der hinteren Begrenzungsfläche (12) angebracht ist und
• die reflektierende Fläche des ersten Endes die reflektierende hintere Begrenzungsfläche (12) bereitstellt,
wobei insbesondere das zweite Ende eingerichtet ist, mit einer Aussparung der Reflektoranordnung (1) verbunden zu sein.

13. Verfahren zum Bereitstellen einer Reflektoranordnung (1), wobei das Verfahren umfasst
• Bereitstellen mindestens eines retroreflektierenden Elements (10), wobei das retroreflektierende Element (10) umfasst
▪ eine vordere Begrenzungsfläche (11), die für den Eintritt von Messlicht (21) in das retroreflektierende Element (10) eingerichtet ist,
▪ eine hintere Begrenzungsfläche (12), die zum Reflektieren des Messlichts als reflektiertes Messlicht (22) eingerichtet ist, wobei die vordere Begrenzungsfläche (11) und die hintere Begrenzungsfläche (12) auf entgegengesetzten Seiten des retroreflektierenden Elements (10) angeordnet sind, und
▪ ein Befestigungselement (37), das an der hinteren Begrenzungsfläche (12) angeordnet ist und davon vorsteht,
• Bereitstellen eines Trägers (2) mit mindestens einer Aussparung (38) zum Tragen des mindestens einen retroreflektierenden Elements (10), wobei die mindestens eine Aussparung (38) eingerichtet ist, das Befestigungselement (37) des retroreflektierenden Elements (10) aufzunehmen, und
• Anordnen einer Anzahl von retroreflektierenden Elementen (10) entsprechend der Anzahl der Aussparungen (38) an dem Träger (2) durch Einführen jedes Befestigungselements (37) der retroreflektierenden Elemente in eine entsprechende Aussparung (38),
wobei insbesondere mindestens zwei Aussparungen vorgesehen sind, sodass jede Aussparung eine bestimmte Ausrichtung umfasst, die sich von der Ausrichtung der anderen Aussparungen unterscheidet, wobei die Ausrichtung einer Aussparung durch eine Einführachse und eine Öffnung der entsprechenden Aussparung definiert ist.

14. Verfahren nach Anspruch 13,
**dadurch gekennzeichnet, dass**
das Verfahren umfasst
• Vorsehen einer Befestigungsplatte (31), die mindestens eine Aussparung umfasst,
• Vorsehen einer optisch transparenten Perle (32) in der Aussparung, der insbesondere in Bezug auf einen Wellenlängenbereich bezogen auf ein bestimmtes Messlicht optisch transparent ist,
• Vorsehen einer Dichtungsabdeckung (33) an der optisch transparenten Perle (32), um eine zu beschichtende Flächenregion der Perle zu definieren,
• Aufbringen einer reflektierenden Beschichtung auf der Perle (32) und dadurch Vorsehen einer beschichteten Perle,
• Vorsehen einer Führungsplatte (35) mit einer Führung (35) an der beschichteten Perle, wobei die Führungsplatte (35) und die Befestigungsplatte (31) derart angeordnet werden, dass die Führung (35) relativ zu der beschichteten Flächenregion der beschichteten Perle mittig angeordnet ist,
• Vorsehen des Befestigungselements (37) in der Führung (35), sodass das Befestigungselement (37) der beschichteten Perle kontaktiert,
• Aufbringen eines Klebstoffs auf dem Befestigungselement (37) und der beschichteten Perle, um eine Verbindung zwischen dem Befestigungselement (37) und der beschichteten Perle vorzusehen und dadurch das retroreflektierende Element (10) bereitzustellen.

## Revendications

1. Agencement de réflecteur (1) destiné à déterminer une position et/ou à marquer un point cible, en particulier pour un relevé industriel ou géodésique, comportant au moins deux éléments rétroréfléchissants (10), dans lequel chacun des au moins deux éléments rétroréfléchissants (10) comprend
• une surface frontière avant (11) respective, configurée pour une entrée de lumière de mesure (21) dans l'élément rétroréfléchissant (10) respectif, et une surface frontière arrière (12) respective, configurée pour réfléchir la lumière de mesure sous forme de lumière de mesure réfléchie (22), dans lequel la surface frontière avant (11) et la surface frontière arrière (12) sont agencées sur des côtés opposés de l'élément rétroréfléchissant (10) respectif, et
• un axe optique (13) respectif défini par l'agencement de la surface frontière avant (11) et/ou de la surface frontière arrière (12) de l'élément rétroréfléchissant (10)respectif,
dans lequel
• la surface frontière avant (11) et la surface frontière arrière (12) de chacun des au moins deux éléments rétroréfléchissants (10) sont de forme courbe, et
• pour chacun des au moins deux éléments rétroréfléchissants (10), un angle d'incidence de la lumière de mesure (21) par rapport à son axe optique (13) est égal à un angle de sortie de la lumière de mesure réfléchie (22) par rapport à son axe optique (13),
**caractérisé en ce que**
chacun des au moins deux éléments rétroréfléchissants (10) comprend un élément de montage (37) agencé au niveau de la surface frontière arrière (12) et faisant saillie de celle-ci, l'élément de montage (37) assurant un montage de l'élément rétroréfléchissant (10) au niveau de l'agencement de réflecteur (1).

2. Agencement de réflecteur (1) selon la revendication 1, **caractérisé en ce que**
• au moins deux des éléments rétroréfléchissants (10) sont agencés avec des orientations différentes, en particulier chacun des au moins deux éléments rétroréfléchissants (10) est agencé avec une orientation particulière différente de l'orientation des autres éléments rétroréfléchissants (10), et/ou
• l'agencement de réflecteur (1) comprend une pluralité d'éléments rétroréfléchissants qui sont agencés chacun avec une orientation particulière différente de l'orientation des autres éléments rétroréfléchissants, et/ou
• les axes optiques (13) de chacun des au moins deux éléments rétroréfléchissants (10) présentent des orientations différentes.

3. Agencement de réflecteur (1) selon l'une quelconque des revendications précédentes,
**caractérisé en ce que**
au moins l'un des éléments rétroréfléchissants (10) est configuré de telle sorte que la lumière de mesure (21) pénétrant dans l'élément rétroréfléchissant (10) au niveau de la surface frontière avant (11) soit focalisée sur la surface frontière arrière (12).

4. Agencement de réflecteur (1) selon l'une quelconque des revendications précédentes, **caractérisé en ce que**
• la surface frontière avant (11) et la surface frontière arrière (12) d'au moins l'un des éléments rétroréfléchissants (10) sont de forme sphérique, et/ou
• au moins l'un des éléments rétroréfléchissants (10) comprend une sphère ayant un indice de réfraction n compris entre 1,9 et 2,1, en particulier dans lequel n = 2.

5. Agencement de réflecteur (1) selon l'une quelconque des revendications précédentes, **caractérisé en ce que** au moins l'un des éléments rétroréfléchissants (10) comprend au moins deux éléments optiques, dans lequel la surface frontière avant (11) est fournie par un premier des au moins deux éléments optiques et la surface frontière arrière (12) est fournie par un deuxième des au moins deux éléments optiques, en particulier dans lequel chacun des au moins deux éléments optiques a un indice de réfraction n tel que n < 2,1.

6. Agencement de réflecteur (1) selon la revendication 5, **caractérisé en ce que**
la surface frontière avant (11) présente un rayon de courbure différent du rayon de courbure de la surface frontière arrière (12), en particulier dans lequel le rayon de courbure de la surface frontière avant est plus petit que le rayon de courbure de la surface frontière arrière.

7. Agencement de réflecteur (1) selon la revendication 5 ou 6,
**caractérisé en ce que**
chacun des au moins deux éléments optiques (10) possède un point central et les au moins deux éléments optiques (10) sont agencés de telle sorte que
• les points centraux des au moins deux éléments optiques (10) coïncident et qu'une distance monocentrique entre la surface frontière avant (11) et la surface frontière arrière (12) est ménagée, ou
• les points centraux des au moins deux éléments optiques (10) présentent un décalage particulier et une distance entre la surface frontière avant (11) et la surface frontière arrière (12) est plus petite que la distance monocentrique.

8. Agencement de réflecteur (1) selon l'une quelconque des revendications précédentes,
**caractérisé en ce que**
l'agencement de réflecteur (1) comprend un porte-élément (2) destiné à porter les au moins deux éléments rétroréfléchissants (10) et les au moins deux éléments rétroréfléchissants sont agencés au niveau du porte-élément.

9. Agencement de réflecteur (1) selon la revendication 8, **caractérisé en ce que**
le porte-élément (2) comprend une monture centrale (3) et les au moins deux éléments rétroréfléchissants (10) sont agencés avec des directions d'orientation différentes, en particulier dans lequel la monture (3) est fournie par une tige s'étendant à travers le porte-élément (2).

10. Agencement de réflecteur (1) selon la revendication 8 ou 9,
**caractérisé en ce que**
le porte-élément (2) comprend une forme sphérique ou cylindrique et au moins deux évidements (38), dans lequel
• chaque évidement (38) est configuré pour porter un élément rétroréfléchissant (10) et
• un élément rétroréfléchissant (10) respectif est agencé au niveau de chaque évidement (38), en particulier dans lequel le porte-élément (2) comprend une pluralité d'évidements (38) et les évidements sont répartis de manière homogène et/ou équidistante par rapport à la surface du porte-élément (2).

11. Élément rétroréfléchissant (10) pour un agencement de réflecteur (1) selon l'une quelconque des revendications précédentes, l'élément rétroréfléchissant (10) comprenant
• une surface frontière avant (11) configurée pour une entrée de lumière de mesure (21) dans l'élément rétroréfléchissant (10) et une surface frontière arrière (12) configurée pour réfléchir la lumière de mesure sous forme de lumière de mesure réfléchie (22), dans lequel la surface frontière avant (11) et la surface frontière arrière (12) sont agencées sur des côtés opposés de l'élément rétroréfléchissant (10), et
• un axe optique (13) défini par l'agencement de la surface frontière avant (11) et/ou de la surface frontière arrière (12) de l'élément rétroréfléchissant (10),
dans lequel
• la surface frontière avant (11) et la surface frontière arrière (12) de l'élément rétroréfléchissant (10) sont de forme courbe, **caractérisé en ce que**
• l'élément rétroréfléchissant (10) comprend un élément de montage (37) agencé au niveau de la surface frontière arrière (12) et faisant saillie de celle-ci, l'élément de montage (37) assurant un montage de l'élément rétroréfléchissant (10) au niveau de l'agencement de réflecteur (1).

12. Élément rétroréfléchissant (10) selon la revendication 11, **caractérisé en ce que**
l'élément de montage (37) comprend une première extrémité et une deuxième extrémité, dans lequel
• la première extrémité comprend une surface réfléchissante tournée à l'opposé de l'élément de montage (37),
• la première extrémité est fixée à la surface frontière arrière (12), et
• la surface réfléchissante de la première extrémité fournit la surface frontière arrière réfléchissante (12),
en particulier dans lequel la deuxième extrémité est configurée pour être reliée à un évidement de l'agencement de réflecteur (1).

13. Procédé pour fournir un agencement de réflecteur (1), le procédé comprenant
• la fourniture d'au moins un élément rétroréfléchissant (10), l'élément rétroréfléchissant (10) comprenant
∘ une surface frontière avant (11) configurée pour une entrée de lumière de mesure (21) dans l'élément rétroréfléchissant (10),
∘ une surface frontière arrière (12) configurée pour réfléchir la lumière de mesure sous forme de lumière de mesure réfléchie (22), dans lequel la surface frontière avant (11) et la surface frontière arrière (12) sont agencées sur des côtés opposés de l'élément rétroréfléchissant (10), et
∘ un élément de montage (37) agencé au niveau de la surface frontière arrière (12) et faisant saillie de celle-ci,
• la fourniture d'un porte-élément (2) comportant au moins un évidement (38) pour porter l'au moins élément rétroréfléchissant (10), dans lequel l'au moins évidement (38) est configuré pour recevoir l'élément de montage (37) de l'élément rétroréfléchissant (10), et
• l'agencement d'un nombre d'éléments rétroréfléchissants (10) correspondant au nombre d'évidements (38) au niveau du porte-élément (2) en insérant chaque élément de montage (37) des éléments rétroréfléchissants dans un évidement (38) respectif,
en particulier dans lequel au moins deux évidements sont prévus de telle sorte que chaque évidement présente une orientation particulière différente de l'orientation des autres évidements, dans lequel l'orientation d'un évidement est définie par un axe d'insertion et une ouverture de l'évidement respectif.

14. Procédé selon la revendication 13,
**caractérisé en ce que**
le procédé comprend
• la fourniture d'une plaque de montage (31) qui comprend au moins un évidement,
• la fourniture d'une bille optiquement transparente (32) dans l'évidement, en particulier optiquement transparent dans une gamme de longueurs d'onde relative à une lumière de mesure particulière,
• la fourniture d'un capot d'étanchéité (33) sur le bille optiquement transparent (32) afin de définir une région de surface du bille à enduire,
• l'application d'un enduit réfléchissant sur la bille (32) et, ce faisant, la fourniture d'une bille enduit,
• la fourniture d'une plaque de guidage (35) avec un guide (35) sur la bille enduit, dans lequel la plaque de guidage (35) et la plaque de montage (31) sont agencées de telle sorte que le guide (35) soit agencé de manière centrale par rapport à la région de surface enduite du bille enduit,
• la fourniture de l'élément de montage (37) dans le guide (35) de telle sorte que l'élément de montage (37) soit en contact avec la bille enduit,
• l'application d'un adhésif au niveau de l'élément de montage (37) et au niveau du bille enduit pour assurer une liaison entre l'élément de montage (37) et la bille enduit et, ce faisant, la fourniture de l'élément rétroréfléchissant (10).
